# FASCICULE DE BREVET EUROPEEN

(11) **EP 2 073 438 B1**
(45) Date de publication et mention de la délivrance du brevet: **16.02.2011**
(21) Numéro de dépôt: 08168170.2
(22) Date de dépôt: 03.11.2008
(51) Int. Cl.: H04L 12/24

(54) **Procédé de surveillance dynamique d'un groupe d'entités mobiles**
Verfahren zur dynamischen Überwachung einer Gruppe von mobilen Einheiten
Method for dynamic surveillance of a group of mobile entities

(30) Priorité: 17.12.2007 FR 0708789
(43) Date de publication de la demande: 24.06.2009
(73) Titulaire: Alcatel Lucent, 75008 Paris (FR)
(72) Inventeur: Jabaud, Philippe c/o Alcatel-Lucent France, 91620, Nozay (FR); Burnside, Gerard c/o Alcatel-Lucent France, 91620, Nozay (FR)
(74) Mandataire: Chaffraix, Sylvain

(56) Documents cités:
- WO-A-2005/009067
- WO-A-2005/091573
- US-A1- 2007 008 150
- US-A1- 2007 263 647
- FRANCOISE SAILHAN ET AL: "Wireless Mesh Network Monitoring: Design, Implementation and Experiments" GLOBECOM WORKSHOPS, 2007 IEEE, IEEE, PI, 1 novembre 2007 (2007-11-01), pages 1-6, XP031207096 ISBN: 978-1-4244-2024-7

## Description

L'invention a trait à la surveillance de groupes d'entités mobiles communicantes sans fil.

Il est courant qu'un groupe d'entités mobiles communicantes sans fil se constitue spontanément sous forme d'un réseau privé sans fil à dimension personnelle (WPAN : Wireless Private Area Networks), également dénommé réseau mobile ad hoc (MANet : Mobile Ad hoc Network), qui présente la particularité de ne reposer sur aucune infrastructure préexistante. Citons le cas de groupes de personnes équipées chacune d'un émetteur/récepteur radio de courte portée (et donc de faible consommation) fonctionnant par exemple suivant l'un des protocoles définis dans la norme IEEE 802.15, tel que les protocoles 802.15.1 (BlueTooth) ou 802.15.4 (ZigBee).

Compte tenu du caractère potentiellement évanescent de ce type de réseau, il apparaît nécessaire d'en assurer une surveillance dynamique, notamment pour en maintenir la cohésion, à défaut de quoi il peut se produire une disjonction du réseau en plusieurs sous-ensembles qui ne peuvent plus communiquer entre eux.

Une solution a été proposée pour remédier à cet inconvénient majeur des réseaux mobiles ad hoc. Suivant cette solution, décrite dans la demande internationale PCT n°WO 2005/009067 (Ericsson), on définit, au sein d'un groupe de terminaux mobiles, un terminal mobile comme point de référence et on définit une distance maximum à ce point, à respecter par tout terminal du groupe. On mesure la distance réelle entre chaque terminal du groupe et le point de référence, et on émet un signal d'alerte lorsque cette distance dépasse la distance maximum.

Cette solution n'est satisfaisante que pour certaines topologies, compactes, de groupes d'entités mobiles. Elle suppose en effet que le point de référence soit situé au centre du groupe, ce qui impose au groupe une contrainte topologique qui, pour certaines applications, n'est pas nécessairement adaptée.

En effet, il se peut que l'on souhaite maintenir la cohésion d'un groupe sans nécessairement que celui-ci soit centré sur un point de référence. Citons le cas d'une colonne de soldats effectuant une marche en file indienne et dont on souhaite maintenir la cohésion pour éviter la perte d'un ou plusieurs retardataires. En prenant comme point de référence logique le soldat de plus haut grade, généralement situé en tête de colonne, il est matériellement impossible d'appliquer la solution proposée par le document Ericsson en utilisant des terminaux de faible portée (tels que BlueTooth ou ZigBee).

L'invention vise à remédier aux inconvénients précités, en proposant un procédé de surveillance dynamique de groupes d'entités communicantes sans fil permettant de veiller de manière simple et fiable à la cohésion du groupe.

A cet effet, l'invention propose un procédé de surveillance dynamique d'un groupe d'entités mobiles communicantes sans fil, qui comprend les opérations suivantes :
- attribuer à chaque entité un identifiant unique ;
- mémoriser au sein d'une entité référente la liste des identifiants de l'ensemble des entités du groupe ;
- déterminer pour chaque entité un voisinage ayant un rayon prédéterminé ;
- de manière récurrente, pour chaque entité du groupe :
   - détecter les autres entités présentes dans son voisinage ;
   - transmettre aux entités détectées un message contenant au moins l'identifiant de l'entité, à relayer jusqu'à l'entité référente ;
- collecter au sein de l'entité référente les messages relayés jusqu'à elle ;
- dresser la liste des identifiants contenus dans les messages ;
- comparer cette liste à la liste mémorisée ;
- si les listes sont identiques, décréter le groupe cohérent ;
- sinon, décréter le groupe non cohérent.

D'autres objets et avantages de l'invention apparaîtront à la lumière de la description faite ci-après en référence aux dessins annexés dans lesquels :
- la figure 1 est une vue schématique illustrant un groupe cohérent d'entités communicantes sans fil ;
- la figure 2 est une vue schématique illustrant le groupe de la figure 1, rendu non cohérent par le détachement d'une entité ;
- la figure 3 est une vue schématique illustrant le groupe de la figure 1, rendu non cohérent par le détachement d'un sous-groupe d'entités ;
- la figure 4 est un diagramme illustrant différentes étapes d'un procédé conforme à l'invention.

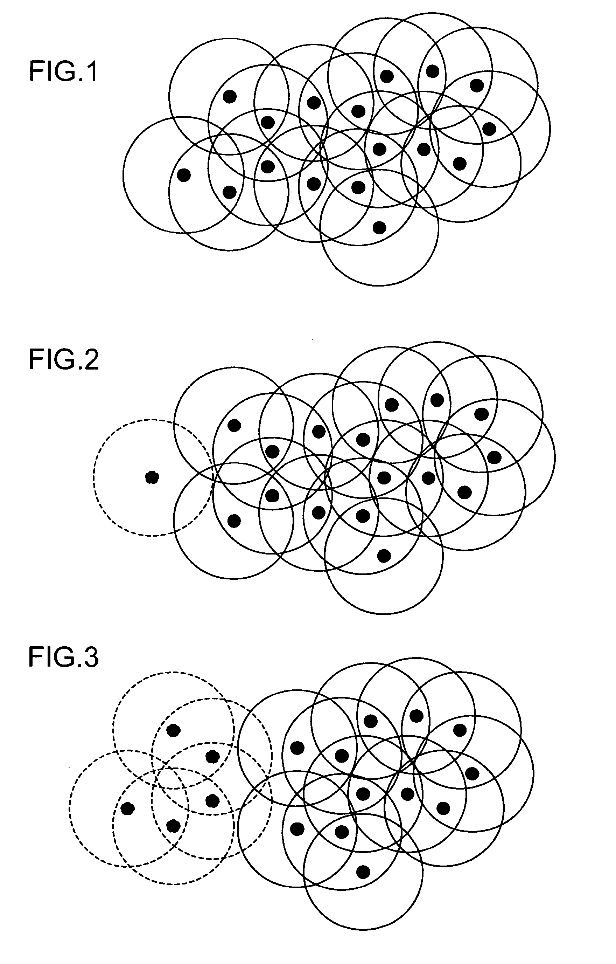

On a représenté sur les figures 1 à 3 un groupe de N entités communicantes sans fil, tels que des émetteurs/récepteurs radio de type BlueTooth ou Zigbee, chaque entité équipant par exemple un membre d'un groupe de personnes dont on souhaite assurer une surveillance dynamique de la cohésion. Chaque entité est représentée par un point sur les figures.

A chaque entité mobile i (où 1 ≤ i ≤ N) est associé un identifiant unique IDᵢ. On suppose que chaque entité possède une certaine portée d'émission, dépendant de la puissance de son émetteur radio. Pour les besoins de la surveillance du groupe, on définit au sein de cette portée un voisinage virtuel, c'est-à-dire un cercle de rayon R prédéterminé centré sur l'entité i (comme représenté par les cercles sur les figures 1 à 3) et inclus dans la portée de celle-ci.

Les entités peuvent toutes présenter un voisinage de même rayon (R étant alors identique pour toutes les entités), ou chaque entité peut présenter un voisinage dont le rayon Rᵢ lui est propre.

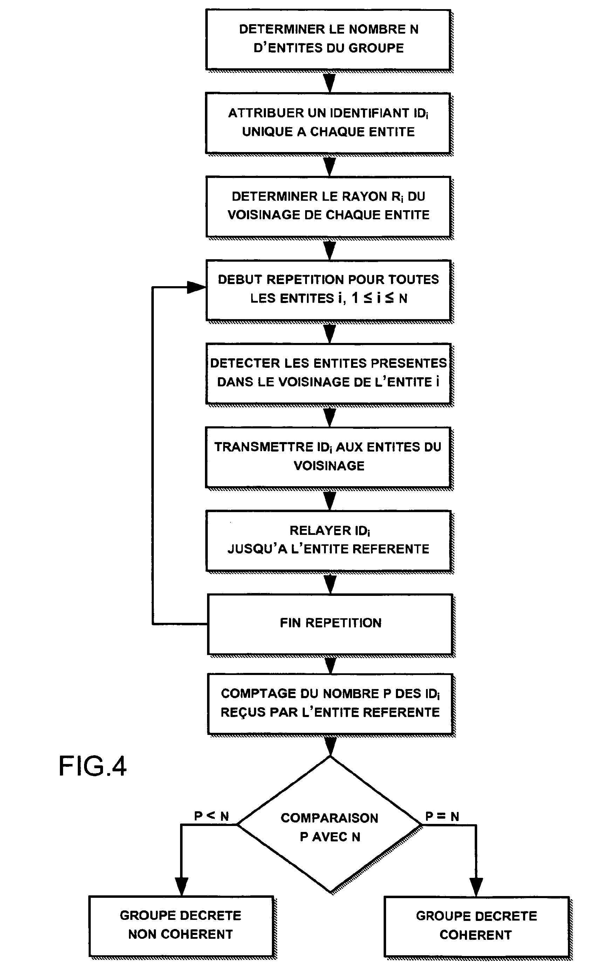

Suivant un premier mode de réalisation, illustré sur la figure 4, la surveillance du groupe d'entités mobiles est assurée de la manière suivante.

On commence par définir une entité référente, qui est en charge de la surveillance du groupe. Cette entité peut, dans un groupe de personnes, être le meneur du groupe (par exemple un adulte surveillant un groupe d'enfants).

On détermine ensuite le nombre N d'entités du groupe. Ce nombre est mémorisé dans l'entité référente. On attribue alors à chaque entité un identifiant unique IDᵢ, on dresse la liste des entités (c'est-à-dire la liste des identifiants), cette liste étant mémorisée dans l'entité référente, et on détermine le rayon du voisinage de chaque entité.

De manière récurrente (par exemple toutes les secondes), on effectue alors pour chaque entité i du groupe les opérations suivantes :
- détection par l'entité i des autres entités présentes dans son voisinage ;
- transmission par l'entité i, aux entités détectées, d'un message contenant l'identifiant IDᵢ, à relayer jusqu'à l'entité référente.

Les messages sont collectés par l'entité référente, laquelle dresse la liste des identifiants contenus dans l'ensemble des messages et évalue alors de manière régulière (par exemple toutes les 1,5 s) la cohésion du groupe en comparant cette liste avec la liste mémorisée.

Si les listes sont identiques, le groupe est décrété cohérent. Cela signifie en effet que l'ensemble des entités ont pu transmettre leur identifiant à l'entité référente, et par conséquent que l'ensemble des entités sont dans le voisinage les unes des autres. Cette situation de cohésion est illustrée sur la figure 1.

Si les listes sont différentes, ce qui signifie qu'au moins une entité est manquante dans la liste des identifiants collectés par rapport à la liste mémorisée, le groupe est décrété non cohérent. Cela signifie en effet qu'une entité au moins ne possède aucune entité dans son voisinage ou n'est située dans le voisinage d'aucune autre entité. Deux configurations non cohérentes sont illustrées sur les dessins : une première sur la figure 2, où une entité (dont le voisinage est représenté en pointillés) est détachée du groupe, et une seconde sur la figure 3, où le groupe est scindé en deux sous-groupes disjoints (les voisinages des entités de l'un de ces deux groupes étant représentés en pointillés), c'est-à-dire que les voisinages de chacun de ces sous-groupes n'incluent aucune entité de l'autre sous-groupe.

La vérification de la cohésion du groupe peut être basée plus simplement sur une comparaison entre le nombre d'identifiants collectés et le nombre d'entités du groupe, tel que mémorisé initialement dans l'entité référente :
- si le nombre P d'identifiants IDᵢ différents collectés par l'entité référente est égal au nombre N d'entités du groupe, le groupe est alors décrété cohérent.
- si le nombre P d'identifiants différents collectés par l'entité référente est inférieur au nombre N d'entités du groupe, le groupe est, au contraire, décrété non cohérent.

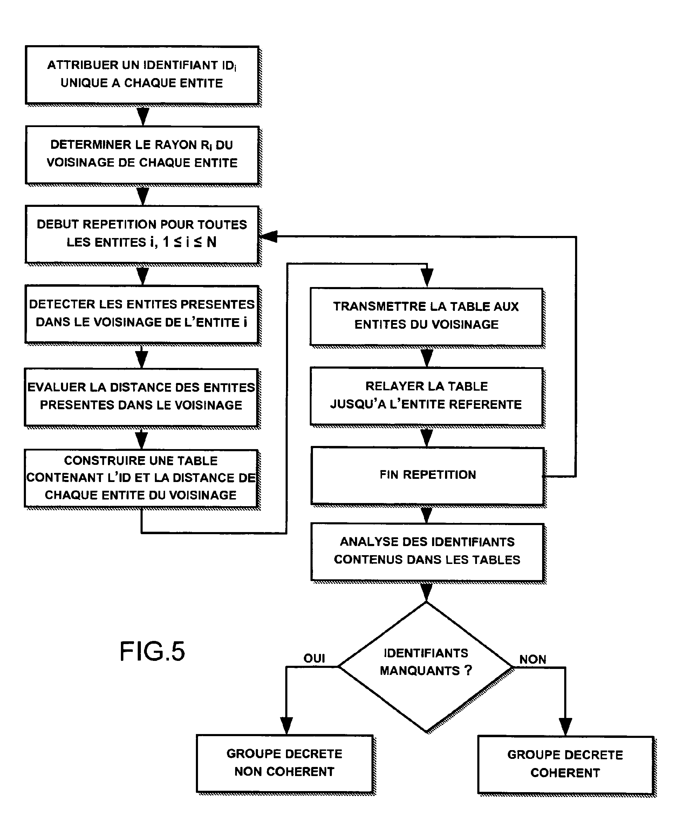

Suivant un deuxième mode de réalisation, illustré sur la figure 5, la surveillance du groupe est assurée de la manière suivante.

On commence par définir l'entité référente, comme indiqué ci-dessus. De même que précédemment, on attribue à chaque entité un identifiant unique IDᵢ, on dresse la liste des entités (c'est-à-dire la liste des identifiants), cette liste étant mémorisée dans l'entité référente, et on détermine le rayon du voisinage de chaque entité.

De manière récurrente (par exemple toutes les secondes), on effectue alors pour chaque entité i du groupe les opérations suivantes :
- détection par l'entité i des autres entités présentes dans son voisinage ;
- évaluation des distances séparant l'entité et les entités détectées dans son voisinage ;
- transmission par l'entité i, aux entités détectées, d'un message à relayer jusqu'à l'entité référente et comprenant l'identifiant IDᵢ ainsi qu'une table contenant les identifiants des entités détectées et la distance de l'entité à celles-ci.

Les messages sont collectés par l'entité référente, laquelle évalue alors de manière régulière (par exemple toutes les 1,5 s), la cohésion du groupe de la manière suivante.

L'entité référente extrait des tables collectées les identifiants différents, et en dresse la liste. La comparaison avec la liste des identifiants mémorisés est effectuée comme indiqué précédemment, les conclusions sur la cohésion du groupe étant tirées de la même manière.

En d'autres termes, si aucun identifiant ne manque, l'ensemble des entités sont soit détectées, soit ont pu adresse un message à l'entité référente. Le groupe est alors décrété cohérent.

Au contraire, si des identifiants sont manquant dans l'ensemble des tables collectées, cela signifie qu'une entité s'est dissociée du groupe et, soit ne contient aucune autre entité dans son voisinage, soit n'est dans le voisinage d'aucune autre entité. Le groupe est alors décrété non cohérent.

Il est possible de paramétrer la notification d'une alerte dans l'hypothèse où le groupe serait décrété non cohérent, afin de permettre au référent (c'es-à-dire, en pratique, le porteur de l'entité référente) de prendre les mesures nécessaires pour rendre au groupe sa cohérence, par exemple en partant à la recherche des éléments manquants du groupe et en les ramenant au sein de celui-ci. Une telle alerte, notifiée par l'entité référente, peut être sonore et/ou visuelle.

Si le groupe est décrété non cohérent, il est préférable de programmer une identification des entités manquantes. Cette identification peut être réalisée simplement en identifiant parmi la liste des identifiants de l'ensemble des entités du groupe, telle que mémorisées au sein de l'entité référente, les identifiants non reçus.

Il peut alors être prévu, afin de redonner au groupe sa cohésion, d'adresser au porteur de toute entité manquante un message, par un canal distinct de la communication effectuée au sein du réseau ad hoc formé par les entités du groupe (par exemple au moyen d'un SMS), pour lui ordonner de rejoindre le groupe. L'entité référente peut également identifier les entités précédemment présentes dans le voisinage de toute entité manquante, ou dont le voisinage comprenait précédemment toute entité manquante. Ces entités peuvent, par exemple, être alertées par l'entité référente et leurs porteurs invités à rechercher l'entité (les entités) manquante(s) pour la (les) ramener au sein du groupe.

Des opérations supplémentaires peuvent être prévues pour permettre une surveillance plus précise du groupe.

Ainsi, il est envisageable de définir préalablement, pour chaque entité du groupe, un minimum requis d'entités présentes dans son voisinage. Chaque entité i effectue alors de manière récurrente, en même temps qu'elle détecte les autres entités de son voisinage, un comptage de ces entités. Puis l'entité i inclut, dans son signal transmis aux entités de son voisinage à relayer jusqu'à l'entité référente, le nombre d'entités ainsi détectées.

L'entité référente dispose de la sorte, en plus du nombre d'entités effectivement présentes au sein du groupe, d'une information supplémentaire - le nombre d'entités présentes dans le voisinage de chaque entité - caractéristique de la densité du groupe. Dans l'hypothèse où la densité compte parmi les caractéristiques du groupe que l'on souhaite surveiller, il peut être utile d'alerter le référent lorsque cette densité devient inférieure à un minimum requis, ce qui témoigne de la dispersion du groupe. Une telle alerte, notifiée par l'entité référente, peut être sonore et/ou visuelle. Divers degrés d'alerte peuvent être prévus, en fonction de la densité constatée.

Par exemple, un niveau d'alerte rouge peut être décrété si au moins une entité du groupe comprend dans son voisinage une seule entité, un niveau d'alerte orange étant décrété si au moins une entité du groupe comprend dans son voisinage deux autres entités, aucune alerte n'étant émise si toute entité comprend dans son voisinage au moins trois autres entités.

Il est, par la méthode décrite ci-dessus, possible de surveiller de manière dynamique un groupe de manière simple, sans obligation de centraliser l'envoi de notification de présence à une entité centrale.

Cette méthode permet donc une plus grande flexibilité du groupe à surveiller, qui peut adopter de nombreuses topologies différentes (par exemple une file indienne) tout en maintenant sa cohérence.

## Revendications

1. Procédé de surveillance dynamique d'un groupe d'entités mobiles communicantes sans fil, comprenant les opérations suivantes :
- attribuer à chaque entité un identifiant unique ;
- déterminer pour chaque entité un voisinage ayant un rayon prédéterminé ;
ce procédé étant **caractérisé en ce qu'**il comprend en outre les étapes suivantes :
- mémoriser au sein d'une entité référente la liste des identifiants de l'ensemble des entités du groupe ;
- de manière récurrente, pour chaque entité du groupe :
- détecter les autres entités présentes dans son voisinage ;
- transmettre aux entités détectées un message contenant au moins l'identifiant de l'entité, à relayer jusqu'à l'entité référente ;
- collecter au sein de l'entité référente les messages relayés jusqu'à elle ;
- dresser la liste des identifiants contenus dans les messages ;
- comparer cette liste à la liste mémorisée ;
- si les listes sont identiques, décréter le groupe cohérent ;
- sinon, décréter le groupe non cohérent.

2. Procédé selon la revendication 1, dans lequel le message transmis par chaque entité aux entités de son voisinage comprend les identifiants de ces entités.

3. Procédé selon la revendication 2, qui comprend pour chaque entité une opération d'évaluation des distances la séparant des entités de son voisinage, et dans lequel le message transmis comprend ces distances.

4. Procédé selon l'une des revendications 1 à 3, qui comprend une opération consistant à définir, pour chaque entité, un minimum requis d'entités présentes dans son voisinage, et, pour chaque entité, une opération de comptage du nombre d'entités détectées dans son voisinage.

5. Procédé selon la revendication 4, dans lequel, pour chaque entité, le message transmis contient le nombre d'entités détectées dans son voisinage.

6. Procédé selon la revendication 5, qui comprend une opération consistant, si pour au moins une entité du groupe le nombre d'entités détectées dans son voisinage est inférieur au minimum requis, une opération de notification d'une alerte.

7. Procédé selon l'une des revendications 1 à 6, qui comprend, si le groupe est décrété non cohérent, une opération d'identification de toute entité manquante, pour laquelle aucun identifiant n'a été relayé jusqu'à l'entité référente.

8. Procédé selon la revendication 7, qui comprend, si le groupe est décrété non cohérent, une opération d'identification de toute entité précédemment située dans le voisinage d'une entité manquante, ou dont le voisinage incluait précédemment une entité manquante.

9. Procédé selon l'une des revendications 1 à 8, qui comprend, si le groupe est décrété non cohérent, la notification d'une alerte.

## Claims

1. Method for dynamically monitoring a group of communicating wireless mobile entities, comprising the following operations:
- assigning each entity a single identifier;
- determining for each entity a vicinity having a predetermined radius; this method being **characterized in that** it further comprises the following steps:
- saving within a referring entity the list of identifiers of all the group's entities;
- recurrently, for each entity in the group:
- detecting the other entities present in its vicinity;
- transmitting to the other detected entities a message containing at least one identifier of the entity, to be relayed to the referring entity;
- collecting within the referring entity the messages relayed up to it;
- creating the list of identifiers contained within the messages;
- comparing this list to the saved list;
- if the lists are identical, declaring the group to be consistent;
- otherwise, declaring the group to be inconsistent.

2. A method according to claim 1, wherein the message transmitted by each entity to the entities in its vicinity includes the identifiers of these entities.

3. A method according to claim 2, which comprises, for each entity, an operation of evaluating the distances separating it from the entities in its vicinity, and in which the transmitted message includes these distances.

4. A method according to one of the claims 1 to 3, which comprises an operation consisting of defining, for each entity, a required minimum of entities present within its vicinity, and for each entity, a operation of counting the number of entities detected in its vicinity.

5. A method according to claim 4, wherein, for each entity, the transmitted message contains the number of entities detected in its vicinity.

6. A method according to claim 5, which comprises an operation consisting, if for at least one entity of the group the number of entities detected in its vicinity is less than the required minimum, an operation issuing an alert.

7. A method according to one of the claims 1 to 6, which comprises, if the group is declared to be inconsistent, an operation of identifying any missing entity, for which no identifier has been relayed up to the referring entity.

8. A method according to claim 7, which comprises, if the group is declared to be inconsistent, an operation of identifying any entity previously located within the vicinity of a missing entity, or whose vicinity previously included a missing entity.

9. A method according to one of the claims 1 to 8, which comprises, if the group is declared to be inconsistent, the issuing of an alert.

## Patentansprüche

1. Verfahren zum dynamischen Überwachen einer Gruppe drahtlos kommunizierender mobiler Einheiten, die folgenden Vorgänge umfassend:
- Zuweisen eines einmaligen Identifikators für jede Einheit;
- für jede Einheit Bestimmen einer Umgebung mit einem vorbestimmten Radius;
Verfahren **dadurch gekennzeichnet, dass** es weiterhin die folgenden Schritte aufweist:
- innerhalb einer Referenzeinheit, Speichern der Liste der Identifikatoren aller Einheiten der Gruppe;
- für jede Einheit der Gruppe wiederholt:
- Erfassen der anderen, in ihrer Nähe gegenwärtigen Einheiten;
- Übertragen einer Mitteilung, die mindestens den Identifikator der Einheit enthält, der bis zu der Referenzeinheit zu übertragen ist, an die erfassten Einheiten;
- innerhalb der Referenzeinheit, Sammeln der bis zu ihr übertragenen Mitteilungen;
- Aufstellen der Liste der in den Mitteilungen enthaltenen Identifikatoren;
- Vergleichen dieser Liste mit der gespeicherten Liste;
- wenn die Listen identisch sind, Erklären der Gruppe als kohärent;
- anderenfalls Erklären der Gruppe als nicht kohärent.

2. Verfahren nach Anspruch 1, bei dem die von jeder Einheit an die Einheiten ihrer Umgebung übertragene Mitteilung die Identifikatoren dieser Einheiten enthält.

3. Verfahren nach Anspruch 2, das für jede Einheit einen Beurteilungsvorgang der Entfernungen, die sie von den Einheiten ihrer Umgebung trennt, umfasst, und bei dem die übertragene Mitteilung diese Entfernungen enthält.

4. Verfahren nach einem der Ansprüche 1 bis 3, das einen Vorgang umfasst, der darin besteht, für jede Einheit ein erforderliches Minimum von Einheiten, die in ihrer Umgebung gegenwärtig sind, zu definieren, und, für jede Einheit, einen Zählvorgang der Anzahl in ihrer Umgebung erfasster Einheiten.

5. Verfahren nach Anspruch 4, bei dem die übertragene Mitteilung für jede Einheit die Anzahl der in ihrer Umgebung erfassten Einheiten enthält.

6. Verfahren nach Anspruch 5, das einen Vorgang umfasst, der in einem Bekanntmachungsvorgang einer Warnung besteht, wenn für mindestens eine Einheit der Gruppe die Anzahl der in ihrer Umgebung erfassten Einheiten kleiner ist als das erforderliche Minimum.

7. Verfahren nach einem der Ansprüche 1 bis 6, das, wenn die Gruppe als nicht kohärent erklärt wird, einen Identifikationsvorgang jeder fehlenden Einheit, für die kein Identifikator bis zu der Referenzeinheit übertragen wurde, umfasst.

8. Verfahren nach Anspruch 7, das, wenn die Gruppe als nicht kohärent erklärt wird, einen Identifikationsvorgang jeder Einheit umfasst, die sich zuvor in der Umgebung einer fehlenden Einheit befand oder deren Umgebung zuvor eine fehlende Einheit enthielt.

9. Verfahren nach einem der Ansprüche 1 bis 8, das, wenn die Gruppe als nicht kohärent erklärt wird, die Bekanntmachung einer Warnung umfasst.
